# EUROPÄISCHE PATENTSCHRIFT

(11) **EP 3 498 529 B1**
(45) Veröffentlichungstag und Bekanntmachung des Hinweises auf die Patenterteilung: **10.06.2020**
(21) Anmeldenummer: 18199496.3
(22) Anmeldetag: 10.10.2018
(51) Int. Cl.: B60N 2/58

(54) **SCHONBEZUG FÜR EINEN KRAFTFAHRZEUGSITZ**
PROTECTIVE COVER FOR A MOTOR VEHICLE SEAT
HOUSSE POUR UN SIÈGE DE VÉHICULE AUTOMOBILE

(30) Priorität: 12.12.2017 AT 4752017
(43) Veröffentlichungstag der Anmeldung: 19.06.2019
(73) Patentinhaber: Walser, Hans-Karl, 6845 Hohenems (AT)
(72) Erfinder: Walser, Hans-Karl, 6845 Hohenems (AT)
(74) Vertreter: Hofmann, Ralf U.

(56) Entgegenhaltungen:
- EP-A1- 0 130 918
- AT-B- 406 036

## Beschreibung

Die Erfindung bezieht sich auf einen Schonbezug für einen Kraftfahrzeugsitz, wobei der Schonbezug einen Bezugsstoff aufweist, der mit mindestens einem Schlitz versehen ist, welcher von einem Band unterlegt ist, das beidseitig des Schlitzes mit dem Bezugsstoff verbunden ist.

Um die Kosten für die Herstellung und Lagerhaltung zu verringern, ist es gewünscht, Schonbezüge so auszubilden, dass sie für unterschiedliche Typen von Kraftfahrzeugsitzen einsetzbar sind. Ein Unterschied von verschiedenen Typen von Kraftfahrzeugsitzen besteht beispielsweise darin, dass Verankerungsstäbe für Kopfstützen an unterschiedlichen Stellen mit Aufnahmen an der oberen Schmalseite der Rückenlehne verbunden sind. Der aus der AT 406 036 B bekannte Schonbezug der eingangs genannten Art sieht hierzu im Bereich des Bezugsstoffs, der über die obere Schmalseite der Rückenlehne verläuft, einen von einem Band unterlegten Schlitz vor. Der Benutzer schneidet in dieses Band an den zum Durchtritt der Verankerungsstäbe gewünschten Stellen Löcher ein. Der hiermit verbundene Aufwand bzw. die Gefahr des Einbringens der Löcher an nicht korrekten Stellen wird aber von vielen Benutzern als nachteilig angesehen.

Aus der WO 2013/026074 A1 ist es bekannt, einen Reißverschluss mit mehreren Schiebern vorzusehen. Der Reißverschluss verläuft über die obere Schmalseite der Rückenlehne und Öffnungen für die Verankerungsstäbe können zwischen jeweils zwei Schiebern ausgebildet werden. Auch ein Durchtritt von anderen Funktionselementen, welche am Sitz vorgesehen sind, kann auf diese Weise ermöglicht werden, beispielsweise kann eine Öffnung an einer seitlichen Schmalseite der Rückenlehne zum Durchtritt eines Bedienelements des Sitzes ausgebildet werden. Nachteilig hierbei ist es, dass überall dort, wo ein allfälliger Durchtritt für ein Funktionselement ermöglicht werden soll, ein Reißverschluss vorzusehen ist. Solche Reißverschlüsse verteuern den Schonbezug und das Aussehen eines Schonbezugs mit solchen Reißverschlüssen wird nicht von Benutzern teilweise nicht als ansprechend empfunden.

Aufgabe der Erfindung ist es, einen vorteilhaften Schonbezug der eingangs genannten Art bereit zu stellen, welcher in einfacher Weise einen Durchtritt von Funktionselementen des Autositzes, beispielsweise von Verankerungsstäben für eine Kopfstütze, ermöglicht. Erfindungsgemäß gelingt dies durch einen Schonbezug mit den Merkmalen des Anspruchs 1.

Beim Schonbezug gemäß der Erfindung ist das Band, mit welchem der Schlitz unterlegt ist, zumindest in einem mittleren Bereich, oberhalb von welchem sich der Schlitz befindet, elastisch dehnbar ausgebildet. Das Band ist im Weiteren mit mindestens zwei, vorzugsweise mindestens fünf, in Längsrichtung des Bandes voneinander beabstandeten Einschnitten oder Öffnungen versehen. Diese Einschnitte oder Öffnungen sind durch den Schlitz hindurch zugänglich.

Es ist somit möglich, Funktionselemente des Kraftfahrzeugsitzes, beispielsweise Verankerungsstäbe für eine Kopfstütze, durch den Schlitz im Bezugsstoff und die Einschnitte oder Öffnungen im Band hindurchzuführen. Der Schlitz im Bezugsstoff kann hierbei so angeordnet werden, dass er sich über einen Bereich erstreckt, innerhalb von dem unterschiedliche Typen von Fahrzeugsitzen das betreffende Funktionselement an unterschiedlichen Positionen aufweist. Je nach im Anwendungsfall tatsächlicher Position des Funktionselements kann dieses durch eine der Einschnitte oder Öffnungen im Band hindurchgeführt werden, wobei der Einschnitt bzw. die Öffnung im Band aufgrund der Elastizität des Bandes gegebenenfalls an die jeweils vorhandene exakte Position des Funktionselements anpassbar ist.

Um für beliebige, im Bereich des Schlitzes liegende Positionen des Funktionselements ein Durchführen des Funktionselements durch einen der Einschnitte bzw. eine der Öffnungen des Bandes zu ermöglichen, betragen die in Längsrichtung des Bandes gemessenen Abstände zwischen aufeinanderfolgenden Einschnitten oder Öffnungen vorzugsweise weniger als 2cm, besonders bevorzugt weniger als 1cm.

Um eine ausreichend große Verschiebung der Einschnitte bzw. Öffnungen im Band aufgrund der Elastizität des Bandes zu ermöglichen, beträgt der rechtwinkelig zur Längserstreckung des Schlitzes gemessene Abstand zwischen den auf beiden Seiten des Schlitzes liegenden Verbindungsbereichen des Bandes mit dem Bezugsstoff vorzugsweise mindestens 8mm, besonders bevorzugt mindestens 1cm.

Vorteilhafterweise ist vorgesehen, dass das Band insgesamt oder zumindest in dem Bereich, in welchem es elastisch ausgebildet ist, ein gummielastisches Material aufweist oder aus einem solchen besteht. Das gummielastische Material kann hierbei eine durchgehende Lage ausbilden, also folienartig ausgebildet sein.

In einer anderen möglichen Ausbildungsform ist das Band aus einzelnen Fäden ausgebildet, besteht also aus einem textilen Material. Das Band kann hierbei als Maschenware ausgebildet sein, insbesondere gewirkt sein, oder - bei einer ausreichenden Elastizität der Fäden - gewebt sein.

Vorzugsweise ist das Band im Bereich der Einschnitte oder Öffnungen zumindest so weit elastisch dehnbar, dass ein jeweiliger Einschnitt bzw. eine jeweilige Öffnung unter elastischer Verformung des Bandes so weit in Längsrichtung des Bandes verschiebbar ist, dass dieser Einschnitt bzw. diese Öffnung in einen Bereich gelangt, in welchem beim ungedehnten Band ein benachbarter Einschnitt bzw. eine benachbarte Öffnung liegt.

Weitere Vorteile und Einzelheiten der Erfindung werden im Folgenden anhand der beiliegenden Zeichnung erläutert. In dieser zeigen:
Fig. 1 eine Schrägsicht eines Kraftfahrzeugsitzes mit einem Schonbezug gemäß einem Ausführungsbeispiel der Erfindung;
Fig. 2 eine Draufsicht auf die Oberseite der Sitzlehne mit dem Schonbezug, ohne die Kopfstütze;
Fig. 3 eine schematische Schrägsicht eines Abschnitts des Schonbezugs im Bereich der Oberseite der Rückenlehne, quer aufgeschnitten.

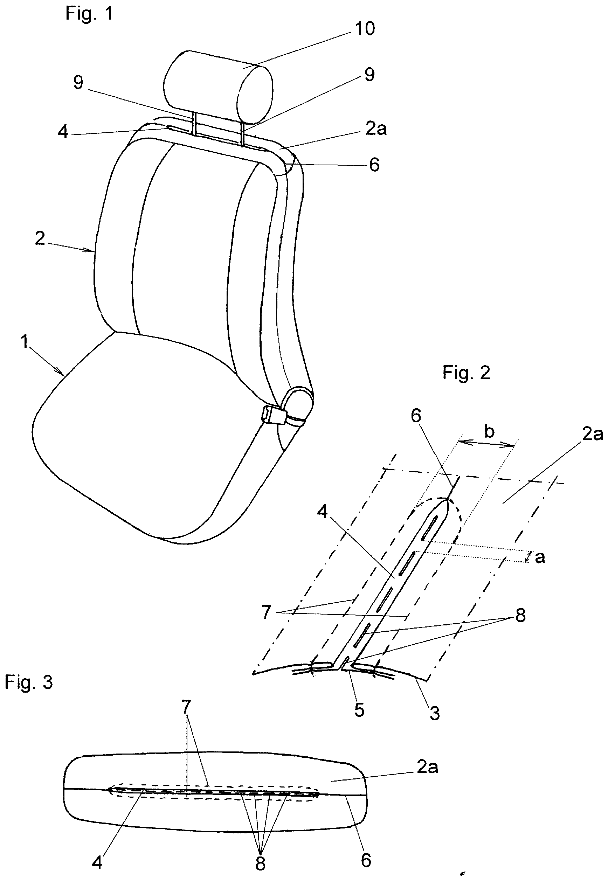

Ein Ausführungsbeispiel der Erfindung ist, vereinfacht und teilweise schematisiert, in den Fig. 1 bis 3 dargestellt. Der Schonbezug kann ein das Sitzteil des Fahrzeugsitzes überdeckendes Bezugsteil 1 und ein die Rückenlehne des Fahrzeugsitzes überdeckendes Bezugsteil 2 aufweisen. Die Bezugsteile 1 und 2 können miteinander verbunden sein oder als separate Teile ausgebildet sein. Das die Rückenlehne überdeckende Bezugsteil 2 kann sackartig ausgebildet sein. Elemente zum Spannen der Bezugsteile 1, 2, welche beispielsweise unter dem Sitzteil des Fahrzeugsitzes angeordnet sein können, sind in den Figuren nicht dargestellt und können entsprechend dem Stand der Technik ausgebildet sein.

Das Bezugsteil 2 weist einen auf der oberen Schmalseite der Rückenlehne aufliegenden Abschnitt 2a auf. In diesem Abschnitt 2a ist der Bezugsstoff 3 mit einem längs der oberen Schmalseite der Rückenlehne sich erstreckenden Schlitz 4 versehen. Unterhalb des Schlitzes 4 befindet sich ein Band 5, welches sich auf beiden Längsseiten des Schlitzes 4 über diesen hinaus erstreckt und den Schlitz 4 (abgesehen von den im Band 5 vorgesehenen Einschnitten oder Öffnungen, welche nachfolgend beschrieben werden) verschließt.

Der Schlitz 4 kann beispielsweise eine Naht 6 unterbrechen, über welche ein Vorderteil und ein Rückenteil des Bezugsteils 2 miteinander verbunden sind. Zur Ausbildung des Schlitzes 4 mit dem unterlegten Band 5 kann der Bezugsstoff 3 umgeschlagen sein und das Band 5 mit dem umgeschlagenen Bezugsstoff 3 entlang einer Naht 7 vernäht sein. Der Bezugsstoff 3 könnte auch doppelt umgeschlagen und vernäht sein.

Es könnten auch separate Nähte vorgesehen sein, die einerseits den Rand des Schlitzes fixieren und andererseits das Band 5 mit dem Bezugsstoff 3 verbinden.

Die Verbindung des Bandes 5 mit dem Bezugsstoff 3 und/oder die Fixierung des Randes des Schlitzes 4 könnte anstelle durch eine (jeweilige) Naht oder zusätzlich hierzu durch eine Verklebung erfolgen.

Das Band 5 besteht im Ausführungsbeispiel aus einer Lage (=Folie) aus Gummi. Eine Ausbildung aus einem elastisch dehnbaren textilen Material ist aber ebenso denkbar und möglich.

In das Band 5 sind eine Mehrzahl von in Längsrichtung des Bandes voneinander beabstandeten Einschnitten oder Öffnungen 8 eingebracht, welche im Bereich des Schlitzes 4 liegen, also durch den Schlitz 4 hindurch zugänglich sind. Die in Längsrichtung des Bandes 5 gemessenen Abstände a zwischen benachbarten Einschnitten oder Öffnungen 8 betragen weniger als 2cm, vorzugsweise weniger als 1cm.

Um eine ausreichende Verschiebung der Einschnitte oder Öffnungen 8, insbesondere in Längsrichtung des Bandes 5 zu ermöglichen, beträgt der in Richtung rechtwinkelig zur Längserstreckung des Schlitzes 4 gemessene Abstand b zwischen den beidseitig des Schlitzes 4 liegenden Verbindungsbereichen des Bandes 5 mit dem Bezugsstoff 3 (welche in diesem Ausführungsbeispiel von Abschnitten der Naht 7 gebildet werden) mindestens 8mm, vorzugsweise mindestens 1cm.

Nachdem der Schonbezug bei abgenommener Kopfstütze an den Kraftfahrzeugsitz angelegt worden ist, befindet sich der den Schlitz 4 aufweisende Abschnitt 2a des Bezugsteils 2 auf der oberen Schmalseite der Rückenlehne des Fahrzeugsitzes. Es können nunmehr die Verankerungsstäbe 9 der Kopfstütze 10 durch passende Einschnitte oder Öffnungen 8 in die hierfür vorgesehenen Aufnahmen im Fahrzeugsitz eingesteckt werden. Wenn sich keiner der Einschnitte bzw. keine der Öffnungen 8 direkt oberhalb der jeweiligen Aufnahme befindet, kann das Band 5 im Bereich eines Einschnitts bzw. einer Öffnung 8, welche den geringsten Abstand zur betreffenden Aufnahme aufweist, so weit gedehnt werden, bis sich der Einschnitt bzw. die Öffnung direkt oberhalb der Aufnahme befindet. Der Schonbezug ist daher für unterschiedliche Typen von Fahrzeugsitzen geeignet, bei denen sich die Positionen der Verankerungsstäbe 9 unterscheiden, ohne dass vom Benutzer an den jeweiligen Stellen der Verankerungsstäbe nachträglich Einschnitte eingebracht werden müssen.

Durch die erfindungsgemäße Ausbildung kann ein Aufklaffen des Schlitzes 4 zuverlässig vermieden werden.

Auch ein Durchtritt von Verankerungsstäben mit unterschiedlichen Durchmessern wird ermöglicht.

In einer modifizierten Ausführungsform kann für jeden der Verankerungsstäbe 9 ein eigener Schlitz 4 mit elastischem Band 5, welches beabstandete Einschnitte oder Öffnungen 8 aufweist, vorgesehen sein.

In analoger Weise können Durchtritte für andere Funktionselemente eines Kraftfahrzeugsitzes vorgesehen sein. Beispielsweise kann an einer seitlichen Schmalseite der Rückenlehne ein Schlitz mit einem unterlegten elastischen Band 5, welches im Bereich des Schlitzes beabstandete Einschnitte oder Öffnungen aufweist, vorgesehen sein, um den Durchtritt eines Stellhebels durch einen der Einschnitte oder Öffnungen zu ermöglichen.

Der Schonbezug kann auch zum Bezug einer Rücksitzbank eines Kraftfahrzeuges vorgesehen sein. Hier kann in analoger Weise wie im Zusammenhang mit dem Durchtritt der Verankerungsstäbe 9 der Kopfstütze 10 beschrieben, ein Durchtritt von Verankerungsteilen für eine ISO-Fix Kindersitzbefestigung ermöglicht werden. Beispielsweise kann auch der Durchtritt eines Gurtschlosses in dieser Weise ermöglicht werden.

Je nach Art der Herstellung des Bandes 5 können Einschnitte oder Öffnungen 8 nach der Herstellung des Bandes 5 in dieses eingebracht werden oder Öffnungen 8 können bereits bei der Herstellung des Bandes 5 ausgebildet werden. So können im Falle der Ausbildung des Bandes 5 durch Wirken Öffnungen 8 bei der Herstellung des gewirkten Bandes ausgebildet werden. Bei der Ausbildung als gewebtes Band können Einschnitte oder Öffnungen nachträglich eingeschnitten, beispielsweise durch Stanzen, und eingefasst werden oder, im Falle der Ausbildung aus einem schmelzfähigen Material, eingeschmolzen werden.

Bei der Ausbildung des Bandes aus einem durchgehenden Folienmaterial werden Einschnitte oder Öffnungen vorzugsweise nach der Herstellung des Bandes eingebracht, beispielsweise durch Stanzen. Eine Einfassung wird im Allgemeinen nicht erforderlich sein.

In das Band 5 eingebrachte Einschnitte können beispielsweise linienförmig oder kreuzförmig ausgebildet sein.

Bei der Ausbildung des Bandes 5 aus einer Maschenware ist es denkbar und möglich, die elastische Verformbarkeit des Bandes nur durch die Maschenbindung zu erreichen. Vorzugsweise sind aber auch elastisch dehnbare Fäden vorgesehen.

Im Ausführungsbeispiel ist das Band 5 durchgehend elastisch ausgebildet. Denkbar und möglich ist es, dass das Band anschließend an seine Längsränder undehnbare oder weniger dehnbare Bereiche aufweist. In diesen undehnbaren oder weniger dehnbaren Bereichen können dann vorteilhafterweise die Verbindungen mit dem Bezugsstoff 3 erfolgen. Das Band ist in diesem Fall nur in einem mittleren Bereich seiner Breite elastisch dehnbar oder leichter und/oder weiter elastisch dehnbar.

In einer modifizierten Ausführungsform kann vorgesehen sein, dass zwischen dem Bezugsstoff 3 und dem Band 5 ein mit dem Bezugsstoff 3 verbundenes Verstärkungsband angeordnet ist, welches im Bereich des Schlitzes des Bezugsstoffs ebenfalls einen Schlitz aufweist. Der Schlitz im Verstärkungsband weist hierbei vorzugsweise zumindest die Ausdehnung des Schlitzes 4 im Bezugsstoff 3 auf. Die Verbindung des Verstärkungsbandes mit dem Bezugsstoff kann durch Annähen erfolgen. Auch ein Ankleben ist denkbar und möglich. Ist das Verstärkungsband an dem Bezugsstoff angenäht, so kann eine gemeinsame Naht zur Verbindung des Bandes 5 und des Verstärkungsbandes mit dem Bezugsstoff vorgesehen sein oder separate Nähte können vorhanden sein.

### Legende zu den Hinweisziffern:

- 1: Bezugsteil
- 2: Bezugsteil
- 2a: Abschnitt
- 3: Bezugsstoff
- 4: Schlitz
- 5: Band
- 6: Naht
- 7: Naht
- 8: Einschnitt oder Öffnung
- 9: Verankerungsstab
- 10: Kopfstütze

## Patentansprüche

1. Schonbezug für einen Kraftfahrzeugsitz, wobei der Schonbezug einen Bezugsstoff (3) aufweist, der mit mindestens einem Schlitz (4) versehen ist, welcher von einem Band (5) unterlegt ist, das beidseitig des Schlitzes (4) mit dem Bezugsstoff (3) verbunden ist, **dadurch gekennzeichnet, dass** das Band (5) zumindest in einem mittleren Bereich, oberhalb von welchem sich der Schlitz (4) befindet, elastisch dehnbar ausgebildet ist und mit mindestens zwei, vorzugsweise mindestens fünf, in Längsrichtung des Bandes (5) voneinander beabstandeten Einschnitten oder Öffnungen (8) versehen ist, welche durch den Schlitz (4) hindurch zugänglich sind.

2. Schonbezug nach Anspruch 1, **dadurch gekennzeichnet, dass** die in Längsrichtung des Bandes (5) gemessenen Abstände (a) zwischen aufeinanderfolgenden Einschnitten oder Öffnungen (8) weniger als 2cm, vorzugsweise weniger als 1 cm betragen.

3. Schonbezug nach Anspruch 1 oder 2, **dadurch gekennzeichnet, dass** der senkrecht zur Längserstreckung des Schlitzes (4) gemessene Abstand (b) zwischen den beidseitig des Schlitzes (4) liegenden Verbindungsbereichen des Bandes (5) mit dem Bezugsstoff (3) mindestens 8mm, vorzugsweise mindestens 1cm beträgt.

4. Schonbezug nach einem der Ansprüche 1 bis 3, **dadurch gekennzeichnet, dass** der Schlitz (4) oder zumindest einer der Schlitze (4) in einem Abschnitt (2a) des Schonbezugs angeordnet ist, der zur Auflage auf der oberen Schmalseite der Rückenlehne des Kraftfahrzeugsitzes vorgesehen ist, wobei der Schlitz (4) einen Durchlass für mindestens einen Verankerungsstab (9) einer Kopfstütze (10) bildet.

5. Schonbezug nach einem der Ansprüche 1 bis 4, **dadurch gekennzeichnet, dass** das Band (5) insgesamt oder zumindest in einem auf seine Breite bezogenen mittleren Bereich, oberhalb von welchem sich der Schlitz (4) befindet, ein gummielastisches Material aufweist oder aus einem solchen besteht.

6. Schonbezug nach Anspruch 5, **dadurch gekennzeichnet, dass** das Band (5) von einer durchgängigen Materiallage gebildet wird.

7. Schonbezug nach einem der Ansprüche 1 bis 5, **dadurch gekennzeichnet, dass** das Band (5) von einem textilen Material gebildet wird.

8. Schonbezug nach einem der Ansprüche 1 bis 7, **dadurch gekennzeichnet, dass** das Band (5) an den Bezugsstoff (3) angenäht ist, wobei die Naht (7) beidseitig des Schlitzes (4) parallel zu diesem verlaufende Abschnitte aufweist.

9. Schonbezug nach einem der Ansprüche 1 bis 8, **dadurch gekennzeichnet, dass** zwischen dem Bezugsstoff (3) und dem Band (5) ein mit dem Bezugsstoff (3) verbundenes Verstärkungsband angeordnet ist, welches im Bereich des Schlitzes (4) des Bezugsstoffs (3) ebenfalls einen Schlitz aufweist.

10. Schonbezug nach Anspruch 9, **dadurch gekennzeichnet, dass** das Verstärkungsband an den Bezugsstoff (3) angenäht ist.

## Claims

1. Protective cover for a motor vehicle seat, wherein the protective cover comprises a cover fabric (3) which is provided with at least one slot (4), which is underlaid by a strip (5) which is connected on either side of the slot (4) to the cover fabric (3), **characterized in that** the strip (5) is configured to be elastically expandable at least in a central region, said slot (4) being located above said region, and is provided with at least two, preferably at least five, incisions or openings (8) which are spaced apart from one another in a longitudinal direction of the strip (5) and which are accessible through the slot (4).

2. Protective cover according to Claim 1, **characterized in that** the spacings (a) between successive incisions or openings (8) are less than 2 cm, preferably less than 1 cm, measured in the longitudinal direction of the strip (5).

3. Protective cover according to Claim 1 or 2, **characterized in that** the spacing (b) between the connecting regions of the strip (5) with the cover fabric (3), said connecting regions being located on either side of the slot (4), is at least 8 mm, preferably at least 1 cm, measured perpendicular to the longitudinal extent of the slot (4).

4. Protective cover according to one of Claims 1 to 3, **characterized in that** the slot (4) or at least one of the slots (4) is arranged in a portion (2a) of the protective cover which is provided for bearing against an upper narrow face of a backrest of the motor vehicle seat, wherein the slot (4) forms a through-passage for at least one anchoring bar (9) of a headrest (10).

5. Protective cover according to one of Claims 1 to 4, **characterized in that** the strip (5) as a whole or at least in a central region relative to its width, said slot (4) being located above said region, comprises a rubber-elastic material or consists of such a material.

6. Protective cover according to Claim 5, **characterized in that** the strip (5) is formed from a continuous material layer.

7. Protective cover according to one of Claims 1 to 5, **characterized in that** the strip (5) is formed from a textile material.

8. Protective cover according to one of Claims 1 to 7, **characterized in that** the strip (5) is stitched onto the cover fabric (3), wherein the seam (7) on either side of the slot (4) has portions extending parallel thereto.

9. Protective cover according to one of Claims 1 to 8, **characterized in that** a reinforcing strip connected to the cover fabric (3) is arranged between the cover fabric (3) and the strip (5), said reinforcing strip also having a slot in the region of the slot (4) of the cover fabric (3).

10. Protective cover according to Claim 9, **characterized in that** the reinforcing strip is stitched onto the cover fabric (3).

## Revendications

1. Housse de siège de véhicule automobile,
la housse ayant un tissu de revêtement (3) muni d'au moins une fente (4) doublée par en dessous d'une bande (5) reliée des deux côtés de la fente (4) au tissu de revêtement (3),
**caractérisée en ce qu'**
au moins dans la zone médiane au-dessus de laquelle se trouve la fente (4), la bande (5) est extensible élastiquement et comporte au moins deux, de préférence au moins cinq coupures ou ouvertures (8) écartées les unes des autres dans la direction longitudinale de la bande (5) et auxquelles on accède à travers la fente (4).

2. Housse selon la revendication 1,
**caractérisée en ce que**
les intervalles (a) mesurés dans la direction longitudinale de la bande (5) entre les coupures ou ouvertures (8) successives sont inférieurs à 2 cm, de préférence inférieurs à 1 cm.

3. Housse selon la revendication 1 ou 2,
**caractérisée en ce que**
la distance (b) mesurée perpendiculairement à l'extension longitudinale de la fente (4) entre les zones de liaison de la bande (5) avec le tissu de revêtement (3), de part et d'autre de la fente (4) est, d'au moins 8 mm et de préférence d'au moins 1 cm.

4. Housse selon l'une des revendications 1 à 3,
**caractérisée en ce que**
la fente (4) ou au moins l'une des fentes (4) se trouve dans un segment (2a) de la housse qui est prévu pour recouvrir le petit côté supérieur du dossier de siège du véhicule, la fente (4) formant un passage pour au moins une tigre d'ancrage (9) d'un appuie-tête (10).

5. Housse selon l'une des revendications 1 à 4,
**caractérisée en ce que**
globalement ou au moins dans la zone médiane par rapport à sa largeur, au-dessus de laquelle se trouve la fente (4), la bande (5) comporte une matière élastique comme du caoutchouc ou est réalisée en une telle matière.

6. Housse selon la revendication 5,
**caractérisée en ce que**
la bande (5) est formée d'une couche de matière perméable.

7. Housse selon l'une des revendications 1 à 5,
**caractérisée en ce que**
la bande (5) est formée d'une matière textile.

8. Housse selon l'une des revendications 1 à 7,
**caractérisée en ce que**
la bande (5) est cousue au tissue de revêtement (3), la couture (7) ayant des segments qui bordent parallèlement la fente (4) sur ses deux côtés.

9. Housse selon l'une des revendications 1 à 8,
**caractérisée en ce qu'**
entre le tissu de revêtement (3) et la bande (5), une bande de renforcement est reliée au tissu de revêtement (3) et elle comporte également une fente dans la zone de la fente (4) du tissu de revêtement (3).

10. Housse selon la revendication 9,
**caractérisée en ce que**
la bande de renforcement est cousue au tissu de revêtement (3).
